# EUROPEAN PATENT SPECIFICATION

(11) **EP 2 093 934 B1**
(45) Date of publication and mention of the grant of the patent: **15.11.2017**
(21) Application number: 08715294.8
(22) Date of filing: 21.03.2008
(51) Int. Cl.: H04L 12/26, H04L 12/931, G06F 11/30

(54) **SYSTEM, DEVICE, EQUIPMENT AND METHOD FOR MONITORING MANAGEMENT**
SYSTEM, GERÄT, EINRICHTUNG UND VERFAHREN ZUR ÜBERWACHUNGSVERWALTUNG
SYSTÈME, DISPOSITIF, ÉQUIPEMENT ET PROCÉDÉ DE SURVEILLANCE DE LA GESTION

(30) Priority: 29.03.2007 CN 200710064934
(43) Date of publication of application: 26.08.2009
(73) Proprietor: Huawei Technologies Co., Ltd., Longgang District Shenzhen, Guangdong 518129 (CN)
(72) Inventor: FANG, Qingyin, Shenzhen Guangdong 518129 (CN); XIA, Qiangzhi, Shenzhen Guangdong 518129 (CN)
(74) Representative: Epping - Hermann - Fischer
(86) International application number: PCT/CN2008/070558
(87) International publication number: WO 2008/119288

(56) References cited:
- WO-A2-2006/058288
- CN-A- 1 832 417
- CN-A- 1 835 322
- CN-A- 1 924 822
- US-B1- 6 853 292
- ANONYMOUS: "IPMI - Intelligent Platform Management Interface Specification passage" IPMI. INTELLIGENT PLATFORM MANAGEMENT INTERFACE SPECIFICATION, XX, XX, no. version 1.5, 20 February 2002 (2002-02-20) , XP002346263

## Description

### FIELD OF THE TECHNOLOGY

The present invention relates to the field of communication technology, and more particularly to the field of monitoring and managing technology.

### BACKGROUND

In communication engineering, because of the high requirement for reliability of communication products, the working status of each communication device, such as boards, components, is needed to be monitored regularly. For example, monitoring whether the temperature of the board is normal, whether various voltages of the board is normal, whether the working status of the power supply or the fan of the system is normal, and so on. Real-time monitoring of those statuses makes sure that the abnormity of some board or component in the system can be found in time. Thus, through reporting alarms to maintenance personnel, the maintenance personnel can be noticed to deal with in time so as to reduce the effect to the system service.

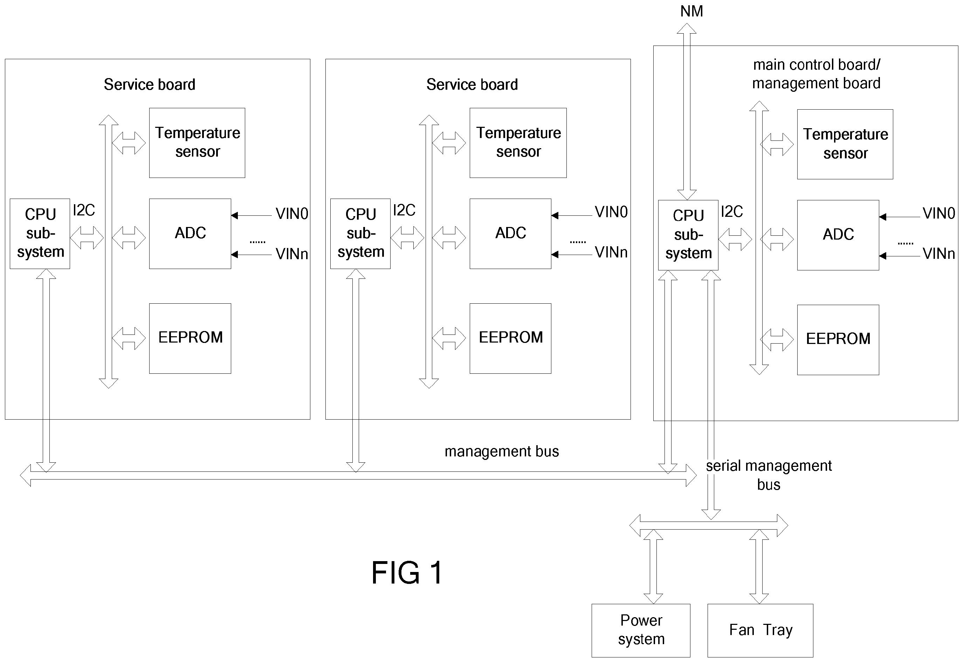

At present, the usual way of monitoring and managing is using the central processing unit (CPU) sub-system on the main control board or on the service board to monitor and manage the board temperature, the board voltage, the Electrically Erasable Programmable Read-Only Memory (EEPROM), and the alarm. Monitoring and managing the EEPROM is to monitor and manage the information stored in the EEPROM, such as the information of board manufacture and asset label. Monitoring and managing the alarm is to monitor and manage the alarm of board clock. As shown in Figure 1, for example, the monitoring parts of the main control board or the service board, such as the temperature sensor, the Analog to Digital (AD) converter, the alarm status collector, and the information of board manufacture and asset label memory (commonly using EEPROM), are connected to the CPU sub-system on the service board by an I²C (Inter-Integrated Circuit) bus. The monitoring parts, such as the temperature sensor, the AD converter, the alarm status collector, etc., report the gained information to the CPU sub-system on the service board by the I²C bus, and the CPU sub-system monitors and manages the information, such as the temperature, the voltage, the clock status, etc., and report the monitoring and managing result to the main control board (or an independent management board) of the system by a management bus. The main control board (or the independent management board) processes the monitoring and managing result and then reports the result to the external Network Management (NM). Monitoring and managing the fan or the power supply of the system is usually implemented by using an independent serial management bus connected to the main control board, such as RS485 bus, etc.

Document WO 2006/058288 discloses a star topology platform management bus architecture and system that provides disaggregation of the platform control element portion and the routing element portion of a central management. In the prior art, computers and other electronic systems often include features with the ability to monitor and control the health and operation of the system hardware. These features may be referred to as platform management. A central management controller is the principle platform management entity in a system. A central management controller works with satellite management controllers (SMCs) in the system, the SMC is an intelligent controller. Sometimes an FRU which incorporates a SMC used to monitor and control devices on the FRU. Detailed description of WO 2006/058288 discloses the central management controller for a system is usually referred to as the baseboard management controller (BMC) for the system. Non-central management controllers may be referenced as SMCs, SMCs perform platform management for a particular part or feature of system.

Document "IPMI-Intelligent Platform Management Interface Specification passage" XP002346263 discloses an overview of IPMI and its main elements and characteristics. In the prior art, IPMI supports the extension of platform management by connecting additional management controllers to the system using the IPMB. The additional management controllers are typically distributed on other boards within the system, away from the central BMC , they are sometimes referred to as satellite controllers.

Document US 6 853 292 discloses a safety-oriented control system, the stations in the system have a redundant design with two independent and galvanically isolated part-system/nodes or channels.

The monitoring and managing of the board in the prior arts is accomplished by the CPU sub-system on the board. Once not working normally for reasons like high temperature, etc., the CPU sub-system is unable to monitor and manage the board.

Besides, the monitoring parts, such as the temperature sensor, the AD converter, the alarm status collector, etc., share the working voltage of the board, as a result, once the voltage gets abnormal, the monitoring parts, such as the temperature sensor, the AD converter, the alarm status collector, etc., are unable to work normally.

### SUMMARY

In consideration of the problems in the prior art, a system, a device and a method for monitoring and managing are provided in the embodiments of the present invention, as defined in the appended claims 1 to 14.

The purpose of the embodiments of the present invention is implemented by the following technical solutions

An embodiment of the present invention provides a communication device, including:
a service board, configured to implement communication service; and
a monitoring module, which is attached to the service board, and configured to monitor the working status of the service board, and report the working status to a system centralized management device by a serial bus so that the system centralized management device performs centralized management according to the working status, the monitoring module is a non-intelligent monitoring module.

An embodiment of the present invention provides a system centralized management device, including:
a centralized management module, which is connected to at least one monitoring module of a communication device, the monitoring module is a non-intelligent monitoring module, and configured to receive working status of service boards from the at least one monitoring module by a serial bus and perform centralized management according to the received working status .

An embodiment of the present invention provides a method for monitoring and managing, which includes the following steps:
monitoring, by a monitoring module, the working status of a service board, and reporting the working status to a system centralized management device by a serial bus, the monitoring module is a non-intelligent monitoring module; and
receiving, by the system centralized management device, the working status of service boards from the monitoring module by the serial bus and performing centralized management according to the received working status by the serial bus.

An embodiment of the present invention provides a system centralized management device, including:
at least one communication device and a system centralized management device.

According to the technical solutions of the embodiments of the present invention, the embodiments of the present invention provide a system, a device and a method for monitoring and managing. The system centralized management device performs centralized management on the monitoring module of the service board by the serial bus, which separates the monitoring circuit of the service board from the circuit under monitor and thus improves the reliability of monitoring and managing the service board.

### BRIEF DESCRIPTION OF THE DRAWINGS

Figure 1 is a schematic view of a method for monitoring and managing in the prior art.
Figure 2 is a schematic view of a method for monitoring and managing with a structure of dual bus according to an embodiment of the present invention;
Figure 3 is a schematic view of a method for monitoring and managing with a structure of voltage combination according to an embodiment of the present invention;
Figure 4 is a schematic structural view of a communication device according to an embodiment of the present invention;
Figure 5 is a schematic view of a system centralized management device according to an embodiment of the present invention.

### DETAILED DESCRIPTION

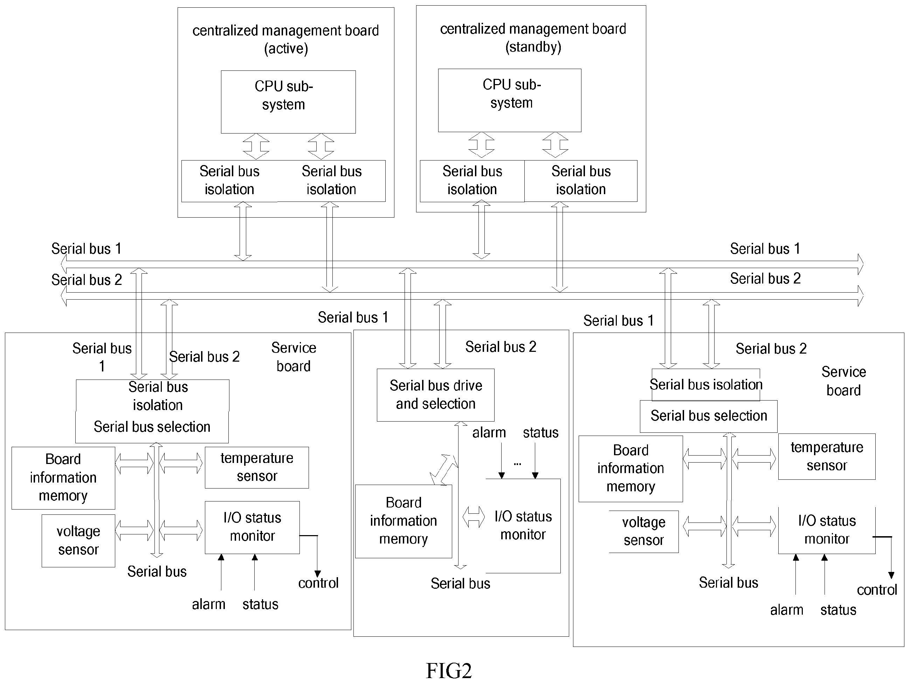

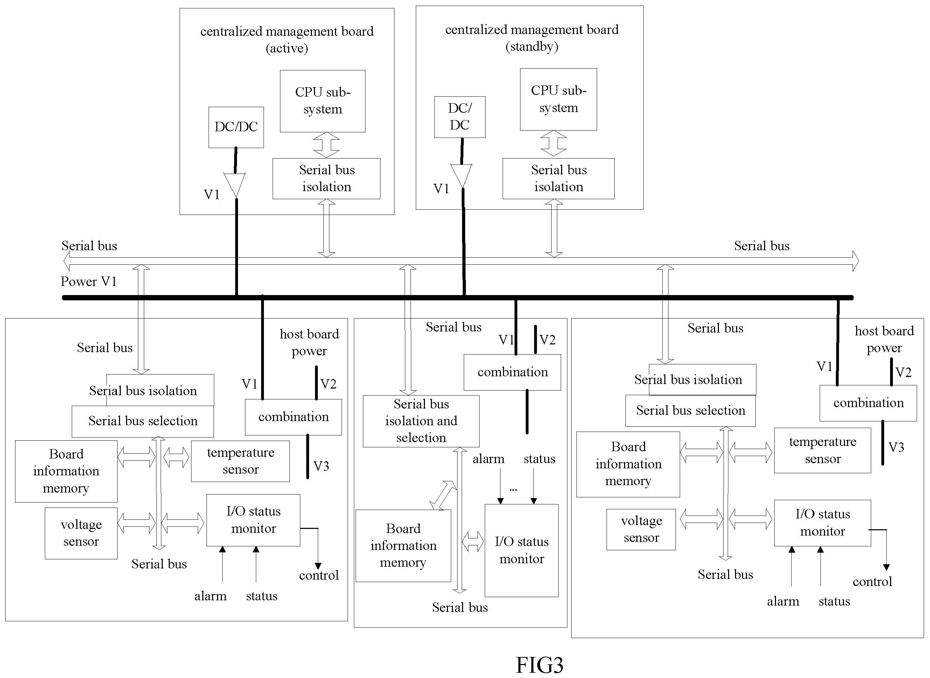

A system in the embodiments of the present invention will be described in detail below with figures 2 and 3.

As shown in Figure 2, a system for monitoring and managing according to an embodiment of the present invention includes at least one system centralized management device and at least one monitoring module. The monitoring module is configured to monitor the working status of a service board. The system centralized management device, which is connected to the monitoring module by the serial bus, and is configured to perform centralized management to the at least one monitoring module. Because the system centralized management device performs centralized management on the monitoring module(s) of the service board(s) by the serial bus, the monitoring circuit of the service board and the circuit under monitor are separated, and thus the reliability of monitoring and managing the service board is improved.

In specific applications of the embodiments of the present invention, the system centralized management device may be a system centralized management board, and the monitoring module may be attached to the service board.

The system structure according to the embodiments of the present invention is shown in Figure 2. The system centralized management board and the service boards under monitor are connected by the serial bus. The system centralized management board performs centralized management on the monitoring modules of the service boards by the serial bus. The monitoring module includes at least one temperature monitoring unit (e.g., a temperature sensor), at least one voltage monitoring unit (e.g., a voltage sensor), at least one board information storage unit (e.g., a board information memory), at least one an alarm status collecting unit (e.g., a board I/O status monitor), etc. The monitoring module will be described in detail below.

The system centralized management board, connected to the monitoring modules by the serial bus, is configured to perform centralized management on the monitoring modules. That is, the system centralized management board queries the information collected by the monitoring modules of the service boards regularly, and perform centralized process on the information of the working status of the service boards reported by the monitoring modules.

The monitoring modules are configured to monitor the working status of the service boards, and report the information of the working status of the service boards to the system centralized management board. The system centralized management board performs centralized monitoring and managing. The information of the working status is usually processed by the CPU sub-system of the system centralized management board.

In this way, the CPU sub-systems of the service boards are not configured to monitor and manage the service boards. When the CPU sub-systems of the service boards are in failure, the monitoring modules are able to go on working normally and reporting the working status of the service boards to the system centralized management board. The system centralized management board performs unified monitoring and managing according to the information of the working status.

The monitoring module includes a temperature monitoring unit, a voltage monitoring unit, a board information storage unit, an alarm status collecting unit, etc. The units are configured to monitor different work status of the service board respectively, for example: the temperature monitoring unit (e.g., a temperature sensor) is configured to monitor the temperature of the service board, and report the monitored temperature to the system centralized management board; the voltage monitoring unit (e.g., a voltage sensor) is configured to monitor the voltage of the service board, and report the monitored voltage to the system centralized management board; the board information storage unit (e.g., a board information memory) is configured to store the information, such as the working status of the service board and the like, and report the monitored information of the working status to the system centralized management board; the alarm status collecting unit (e.g., a board I/O status monitor) is configured to monitor the I/O status of the service board, and report the monitored I/O status to the system centralized management board.

In specific applications of the embodiments of the present invention, the monitoring module may include one or more of the units above.

The serial bus in the embodiments of the present invention may be an I²C bus used in connection between chips or a serial peripheral interface (SPI) bus, etc.

The topology of the serial bus includes a star topology or a bus topology. If the topology of the serial bus is a bus topology, two buses may be used to back up each other for improving the reliability. As shown in Figure 2, of the serial bus 1 and the serial bus 2, one is used as an active serial bus, and the other is used as a standby serial bus. When the active serial bus is in failure, the standby serial bus can take the place of the active serial bus so as to ensure that the information is transmitted normally between the system centralized management board and the service boards.

In addition, the system centralized management board may also have a backup, which is an active system centralized management board and a standby system centralized management board. When the active system centralized management board is in failure, the standby system centralized management board can be switched to, so as to ensure that the standby system centralized management board keeps on monitoring the service boards.

The voltage for the monitoring module in the embodiments of the present invention may be provided by an independent power supply. As shown in Figure 3, the voltage for the monitoring module and the voltage for other circuits are separated in each service board so as to improve the reliability. The voltage V3 for the monitoring module, including a temperature sensor, a voltage sensor, a board information memory, a board I/O status monitor, etc., is a combination of the voltage V1 provided by the system centralized management board and the voltage V2 provided by the service board, and thus as long as one of the voltage V1 and the voltage V2 works normally, the voltage V3 for the monitoring module is provided. For example, if the voltage V1 provided by the system centralized management board is lower than the voltage V2 provided by the service board, the voltage for the monitoring module is provided by the service board; if the power supply of the service board is in failure, the system centralized management board keeps on providing the voltage for the monitoring module, and thus ensure that the monitoring module keeps on working.

The monitoring module in the embodiments of the present invention may be a non- intelligent monitoring module, which itself does not process the information of the working status and sends the information of the working status to the system centralized management board. The system centralized management board performs unified managing according to the information of the working status. In this way, the design of the monitoring module is simpler, and the production cost is lower during the practical production process.

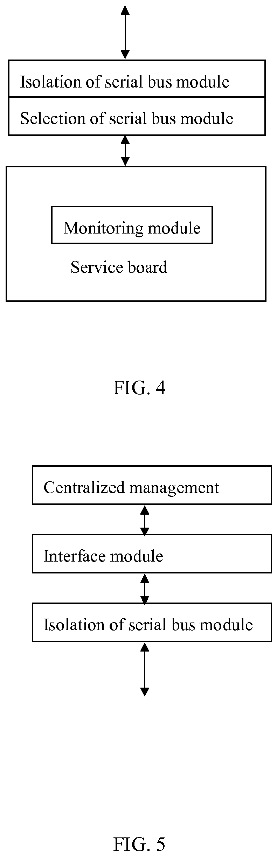

A communication device and a system centralized management device in the embodiments of the present invention will be described below in detail with reference to figure 4 and figure 5.

As shown in figure 4, the communication device in the embodiments of the present invention includes: a service board, configured to implement communication service; and a monitoring module, which is connected to a system centralized management device by a serial bus and attached to the service board, and is configured to monitor the working status of the service board, and report the working status to the system centralized management device. In specific applications of the embodiments of the present invention, the monitoring module on the service board may be independent in function, and the monitoring module is configured to monitor the working status of the service board and send the information of the working status through the serial bus inside the service board. The system centralized management device performs unified monitoring and managing on the monitoring modules by the serial bus outside the service board.

The communication device further includes an isolation of serial bus module, and a selection of serial bus module.

The isolation of serial bus module is configured to isolate the serial bus inside the service board from the serial bus outside the service board. The isolation of serial bus module isolates the circuits and parts inside the service board from the serial bus outside the service board, and this ensures that the rest parts of the system work normally when the circuits and parts inside the service board are in failure. The isolation of serial bus module may be implemented as an isolation circuit in specific applications of the embodiments of the present invention.

When the serial bus connects the system centralized management device and the monitoring module in a bus topology, the serial bus further includes a standby serial bus, the selection of serial bus module is configured to select a serial bus according to the working status of the serial buses. The active serial bus or the standby serial bus may be selected.

As shown in Figure 5, the system centralized management device in the embodiments of the present invention includes an interface module and a centralized management module. The interface module is configured to connect to a monitoring module(s) of a communication device(s). The centralized management module is configured to perform centralized management on the monitoring modules of the communication devices by a serial bus. The centralized management module queries the working status of the service boards of the communication devices regularly, and the monitoring modules send the working status of the service boards to the centralized management module of the system centralized management device by the serial bus. The centralized management module performs centralized process on the information of the working status so as to find the failure of the service boards in time, and take necessary protections.

The system centralized management device further includes an isolation of serial bus module.

The isolation of serial bus module is configured to isolate the serial bus inside the system centralized management device from the serial bus outside system centralized management device. The isolation of serial bus module isolates the circuits and parts inside the system centralized management device from the serial bus outside the system centralized management device, and this ensures that the rest parts of the system work normally when the circuits and parts inside the system centralized management device are in failure. The isolation of serial bus module may be implemented as an isolation circuit in specific applications of the embodiments of the present invention.

The embodiments of the present invention further provide a network apparatus which includes at least one communication device and at least one system centralized management device. The communication device includes: a service board, configured to implement communication service; and a monitoring module, which is attached to the service board, and configured to monitor the working status of the service board, and report the working status to the system centralized management device. The system centralized management device includes: an interface module, configured to connect a centralized management module to the monitoring module of the communication device; and the centralized management module, configured to perform centralized management on the monitoring module of the communication device by a serial bus.

The communication device and the system centralized management device in the network apparatus have been described above in detail, and are not repeated any further herein.

The method in the embodiments of the present invention is described below in detail, including:
a monitoring module of a service board monitors the working status of the service board, and reports the working status to a system centralized management device by a serial bus; and
according to the working status, the system centralized management device performs centralized management on the monitoring module of the service board.

The method in the embodiments of the present invention has been described in the above system in detail, and is not repeated any further herein.

The monitoring module in the embodiments of the present invention may be attached in the service board or independent of the service board, monitoring the working status of the service board.

A system centralized management device includes a centralized management module connected to a communication device by a serial bus. The centralized management module includes a CPU, which is connected to a monitoring module of the communication device, and configured to perform centralized management on the monitoring module of the communication device.

The communication device includes: a service board, configured to implement communication service; and a monitoring module, which is attached to the service board, and configured to monitor the working status of the service board.

Therein the system centralized management device further includes an isolation of serial bus module. The isolation of serial bus module connects to the CPU by the serial bus and to an isolation of serial bus module in the communication device by the serial bus, and the isolation of serial bus module in the communication device connects to the monitoring module in the communication device.

The isolation of serial bus module in the system centralized management device is configured to isolate the serial bus between the CPU and the isolation of serial bus module in the system centralized management device from the serial bus between the centralized management module and the communication device.

The isolation of serial bus module in the communication device is configured to isolate the serial bus between the centralized management module and the communication device from the serial bus between the isolation of serial bus module in the communication device and the monitoring module.

According to the technical solutions in the embodiments of the present invention, the embodiments of the present invention provide a system, a device, an apparatus, and a method for monitoring and managing. The system centralized management board performs centralized management on the monitoring module of the service board by the serial bus, which improves the reliability of monitoring and managing the communication device and reduces the cost efficiently. Besides, the voltage of the monitoring module of the service board in the embodiments of the present invention is a combination of the voltage of the system centralized management board and the voltage of the service board, and this improves the reliability of the monitoring module of the service board more. The centralized management may be alarm, reset, power on, power off, and so on.

Some exemplary embodiments of the present invention have been described above, but the scope of the invention is not limited to such embodiments. Various modifications and alternatives may be made by those skilled in the art to the invention without departing from the scope of the invention, and all the modifications and alternatives are indented to be covered by the scope of the invention defined by the appending claims.

## Claims

1. A communication device, **characterized by**, comprising:
a service board, configured to implement communication service; and
a monitoring module, which is attached to the service board, configured to monitor the working status of the service board, and report the working status to a system centralized management device by a serial bus so that the system centralized management device performs centralized management according to the working status, the monitoring module is a non-intelligent monitoring module, which does not itself process the information of the working status.

2. The communication device according to claim 1, further comprising:
an isolation of serial bus module, configured to isolate the serial bus between the monitoring module and the system centralized management device from the serial bus inside the service board.

3. The communication device according to claim 1 or 2, further comprising:
a selection of serial bus module, configured to select one of the serial buses between the monitoring module and the system centralized management device, wherein the serial buses comprise an active serial bus and a standby serial bus.

4. The communication device according to any one of claims 1 to 3, the voltage of the monitoring module is a combination of the voltage provided by the system centralized management device and the voltage provided by the service board.

5. A system centralized management device, **characterized by**, comprising:
a centralized management module, which is connected to at least one monitoring module of a communication device, the monitoring module is a non-intelligent monitoring module, configured to receive working status of service boards from the at least one monitoring module by a serial bus and perform centralized management according to the received working status, which non-intelligent monitoring module does not itself process the information of the working status.

6. The system centralized management device according to claim 5, further comprising:
an isolation of serial bus module, configured to isolate the serial bus inside the system centralized management device from the serial bus between the at least one monitoring module and the centralized management module.

7. The system centralized management device according to claim 5 or 6, further comprising:
an interface module, configured to connect the centralized management module to the at least one monitoring module.

8. The system centralized management device according to any one of claims 5 to 7, wherein the centralized management module comprises a CPU, which is connected to the at least one monitoring module and configured to perform centralized management on the at least one monitoring module.

9. A system for monitoring and managing, comprising at least one communication device according to any one of claims 1 to 3 and a system centralized management device according to any one of claims 5 to 8.

10. The system for monitoring and managing according to claim 9, wherein the serial bus connects the system centralized management device and the monitoring module in a bus topology or a star topology.

11. The system for monitoring and managing according to claim 9, further comprising a standby serial bus backing up the serial bus.

12. The system for monitoring and managing according to claim 9, further comprising a standby system centralized management device backing up the system centralized management device.

13. The system for monitoring and managing according to claim 9, wherein the voltage of the monitoring module is a combination of the voltage provided by the system centralized management device and the voltage provided by the service board.

14. A method for monitoring and managing, comprising the following steps:
monitoring, by a monitoring module, the working status of a service board, and reporting the working status to a system centralized management device by a serial bus, the monitoring module is a non-intelligent monitoring module, which does not itself process the information of the working status; and
receiving, by the system centralized management device, the working status of service boards from the monitoring module by the serial bus and performing centralized management according to the received working status.

## Patentansprüche

1. Kommunikationsvorrichtung, **dadurch gekennzeichnet, dass** sie Folgendes umfasst:
eine Dienstplatine, die konfiguriert ist, einen Kommunikationsdienst zu implementieren; und
ein Überwachungsmodul, das an der Dienstplatine angebracht ist und das konfiguriert ist, den Arbeitsstatus der Dienstplatine zu überwachen und den Arbeitsstatus an eine zentrale Systemmanagementvorrichtung durch einen seriellen Bus zu berichten, so dass die zentrale Systemmanagementvorrichtung ein zentrales Management gemäß dem Arbeitsstatus ausführt, wobei das Überwachungsmodul ein nicht intelligentes Überwachungsmodul ist, das die Informationen über den Arbeitsstatus nicht selbst verarbeitet.

2. Kommunikationsvorrichtung nach Anspruch 1, die ferner Folgendes umfasst:
ein Modul zur Isolierung des seriellen Busses, das konfiguriert ist, den seriellen Bus zwischen dem Überwachungsmodul und der zentralen Systemmanagementvorrichtung von dem seriellen Bus innerhalb der Dienstplatine zu isolieren.

3. Kommunikationsvorrichtung nach Anspruch 1 oder 2, die ferner Folgendes umfasst:
ein Modul zur Auswahl des seriellen Busses, das konfiguriert ist, einen der seriellen Busse zwischen dem Überwachungsmodul und der zentralen Systemmanagementvorrichtung auszuwählen, wobei die seriellen Busse einen aktiven seriellen Bus und einen seriellen Reserve-Bus umfassen.

4. Kommunikationsvorrichtung nach einem der Ansprüche 1 bis 3, wobei die Spannung des Überwachungsmoduls eine Kombination aus der Spannung, die durch die zentrale Systemmanagementvorrichtung bereitgestellt wird, und der Spannung, die durch die Dienstplatine bereitgestellt wird, ist.

5. Zentrale Systemmanagementvorrichtung, **dadurch gekennzeichnet, dass** sie Folgendes umfasst:
ein Modul für zentrales Management, das mit wenigstens einem Überwachungsmodul der Kommunikationsvorrichtung verbunden ist, wobei das Überwachungsmodul ein nicht intelligentes Überwachungsmodul ist, das konfiguriert ist, den Arbeitsstatus von Dienstplatinen von dem wenigstens einen Überwachungsmodul durch einen seriellen Bus zu empfangen und ein zentrales Management gemäß dem empfangenen Arbeitsstatus auszuführen, wobei das nicht intelligente Überwachungsmodul die Informationen über den Arbeitsstatus nicht selbst verarbeitet.

6. Zentrale Systemmanagementvorrichtung nach Anspruch 5, die ferner Folgendes umfasst:
ein Modul zur Isolierung des seriellen Busses, das konfiguriert ist, den seriellen Bus innerhalb der zentralen Systemmanagementvorrichtung von dem seriellen Bus zwischen dem wenigstens einen Überwachungsmodul und dem Modul für zentrales Management zu isolieren.

7. Zentrale Systemmanagementvorrichtung nach Anspruch 5 oder 6, die ferner Folgendes umfasst:
ein Schnittstellenmodul, das konfiguriert ist, das Modul für zentrales Management mit dem wenigstens einen Überwachungsmodul zu verbinden.

8. Zentrale Systemmanagementvorrichtung nach einem der Ansprüche 5 bis 7, wobei das Modul für zentrales Management eine CPU umfasst, die mit dem wenigstens einen Überwachungsmodul verbunden ist und konfiguriert ist, ein zentrales Management auf dem wenigstens einen Überwachungsmodul auszuführen.

9. System zum Überwachen und Managen, das wenigstens eine Kommunikationsvorrichtung nach einem der Ansprüche 1 bis 3 und eine zentrale Systemmanagementvorrichtung nach einem der Ansprüche 5 bis 8 umfasst.

10. System zum Überwachen und Managen nach Anspruch 9, wobei der serielle Bus die zentrale Systemmanagementvorrichtung und das Überwachungsmodul in einer Bus-Topologie oder einer Stern-Topologie verbindet.

11. System zum Überwachen und Managen nach Anspruch 9, das ferner einen seriellen Reserve-Bus umfasst, der den seriellen Bus absichert.

12. System zum Überwachen und Managen nach Anspruch 9, das ferner eine zentrale Reserve-Systemmanagementvorrichtung umfasst, die die zentrale Systemmanagementvorrichtung absichert.

13. System zum Überwachen und Managen nach Anspruch 9, wobei die Spannung des Überwachungsmoduls eine Kombination aus der Spannung, die durch die zentrale Systemmanagementvorrichtung bereitgestellt wird, und der Spannung, die durch die Dienstplatine bereitgestellt wird, ist.

14. Verfahren zum Überwachen und Managen, das die folgenden Schritte umfasst:
Überwachen durch ein Überwachungsmodul des Arbeitsstatus einer Dienstplatine und Berichten des Arbeitsstatus an eine zentrale Systemmanagementvorrichtung durch einen seriellen Bus, wobei das Überwachungsmodul ein nicht intelligentes Überwachungsmodul ist, das die Informationen über den Arbeitsstatus nicht selbst verarbeitet; und
Empfangen durch die zentrale Systemmanagementvorrichtung des Arbeitsstatus von Dienstplatinen von dem Überwachungsmodul durch den seriellen Bus und Ausführen eines zentralen Managements gemäß dem empfangenen Arbeitsstatus.

## Revendications

1. Dispositif de communication, **caractérisé en ce qu'**il comprend :
une carte de service, configurée pour mettre en oeuvre un service de communication ; et
un module de surveillance, qui est attaché à la carte de service, configuré pour surveiller l'état de fonctionnement de la carte de service, et signaler l'état de fonctionnement à un dispositif de gestion centralisée de système par un bus série de telle sorte que le dispositif de gestion centralisée de système effectue une gestion centralisée en fonction de l'état de fonctionnement, le module de surveillance étant un module de surveillance non intelligent qui ne traite pas lui-même les informations de l'état de fonctionnement.

2. Dispositif de communication selon la revendication 1, comprenant en outre :
un module d'isolement de bus série, configuré pour isoler le bus série entre le module de surveillance et le dispositif de gestion centralisée de système du bus série à l'intérieur de la carte de service.

3. Dispositif de communication selon la revendication 1 ou 2, comprenant en outre :
un module de sélection de bus série, configuré pour sélectionner un des bus série entre le module de surveillance et le dispositif de gestion centralisée de système, les bus série comprenant un bus série actif et un bus série de réserve.

4. Dispositif de communication selon l'une quelconque des revendications 1 à 3, dans lequel la tension du module de surveillance est une combinaison de la tension fournie par le dispositif de gestion centralisée de système et de la tension fournie par la carte de service.

5. Dispositif de gestion centralisée de système, **caractérisé en ce qu'**il comprend :
un module de gestion centralisée, qui est relié à au moins un module de surveillance d'un dispositif de communication, le module de surveillance étant un module de surveillance non intelligent, configuré pour recevoir un état de fonctionnement de cartes de service depuis l'au moins un module de surveillance par un bus série et effectuer une gestion centralisée en fonction de l'état de fonctionnement reçu, lequel module de surveillance non intelligent ne traite pas lui-même les informations de l'état de fonctionnement.

6. Dispositif de gestion centralisée de système selon la revendication 5, comprenant en outre :
un module d'isolement de bus série, configuré pour isoler le bus série à l'intérieur du dispositif de gestion centralisée de système du bus série entre l'au moins un module de surveillance et le module de gestion centralisée.

7. Dispositif de gestion centralisée de système selon la revendication 5 ou 6, comprenant en outre :
un module d'interface, configuré pour relier le module de gestion centralisée à l'au moins un module de surveillance.

8. Dispositif de gestion centralisée de système selon l'une quelconque des revendications 5 à 7, dans lequel le module de gestion centralisée comprend une UCT, qui est reliée à l'au moins un module de surveillance et configurée pour effectuer une gestion centralisée sur l'au moins un module de surveillance.

9. Système de surveillance et de gestion, comprenant au moins un dispositif de communication selon l'une quelconque des revendications 1 à 3 et un dispositif de gestion centralisée de système selon l'une quelconque des revendications 5 à 8.

10. Système de surveillance et de gestion selon la revendication 9, dans lequel le bus série relie le dispositif de gestion centralisée de système et le module de surveillance dans une topologie de bus ou une topologie d'étoile.

11. Système de surveillance et de gestion selon la revendication 9, comprenant en outre un bus série de réserve en secours du bus série.

12. Système de surveillance et de gestion selon la revendication 9, comprenant en outre un dispositif de gestion centralisée de système de réserve en secours du dispositif de gestion centralisée de système.

13. Système de surveillance et de gestion selon la revendication 9, dans lequel la tension du module de surveillance est une combinaison de la tension fournie par le dispositif de gestion centralisée de système et de la tension fournie par la carte de service.

14. Procédé de surveillance et de gestion, comprenant les étapes suivantes :
la surveillance, par un module de surveillance, de l'état de fonctionnement d'une carte de service, et le signalement de l'état de fonctionnement à un dispositif de gestion centralisée de système par un bus série, le module de surveillance étant un module de surveillance non intelligent, qui ne traite pas lui-même les informations de l'état de fonctionnement ; et
la réception, par le dispositif de gestion centralisée de système, de l'état de fonctionnement de cartes de service depuis le module de surveillance par le bus série et l'exécution d'une gestion centralisée en fonction de l'état de fonctionnement reçu.
